# EUROPÄISCHE PATENTSCHRIFT

(11) **EP 4 385 876 B1**
(45) Veröffentlichungstag und Bekanntmachung des Hinweises auf die Patenterteilung: **25.02.2026**
(21) Anmeldenummer: 23213274.6
(22) Anmeldetag: 30.11.2023
(51) Int. Cl.: B62M 6/65

(54) **FAHRRADNABE, SYSTEM, FAHRRAD UND VERFAHREN ZUR MONTAGE EINER FAHRRADNABE**
BICYCLE HUB, SYSTEM, BICYCLE AND METHOD FOR ASSEMBLING A BICYCLE HUB
MOYEU DE BICYCLETTE, SYSTÈME, BICYCLETTE ET PROCÉDÉ D'ASSEMBLAGE D'UN MOYEU DE BICYCLETTE

(30) Priorität: 15.12.2022 DE 102022133475
(43) Veröffentlichungstag der Anmeldung: 19.06.2024
(73) Patentinhaber: Porsche eBike Performance GmbH, 85521 Ottobrunn (DE)
(72) Erfinder: Drost, Klaus, 85521 Ottobrunn (DE); Leininger, Matthias, 85521 Ottobrunn (DE); Winkel, Maximilian, 85521 Ottobrunn (DE)
(74) Vertreter: Völkl Siebenson Patentanwälte - Partnerschaft mbB

(56) Entgegenhaltungen:
- EP-A1- 4 151 513
- US-A1- 2016 075 225
- US-B2- 11 110 982

## Beschreibung

Es wird eine Fahrradnabe angegeben. Darüber hinaus werden ein System mit einer Fahrradnabe, ein Fahrrad und ein Verfahren zur Montage einer Fahrradnabe angegeben. Die Erfindung ist in den Patentansprüchen definiert.

Fahrräder realisieren kostengünstige, leicht zu handhabende und emissionsfreie Fortbewegungsmittel. Sie haben auch als Sport- beziehungsweise Fitnessgeräte Verbreitung gefunden, und es haben sich für unterschiedliche Einsatzfelder besonders geeignete Typen herausgebildet.

In den letzten Jahren wächst die Begeisterung für Elektrofahrräder, insbesondere sogenannte "Pedelecs", und das auch trotz der für Fahrräder hohen Gewichte und Preise. Potenzielle Kunden sind nicht nur ältere, weniger konditionsstarke oder von sportlichen Ambitionen freie Radfahrer, sondern auch sportliche, jüngere Fahrer, sei es zur Nutzung auf dem Arbeitsweg oder wegen der Möglichkeit, mit ihnen ohne Überbeanspruchung der eigenen Physis den Aktionsradius zu erweitern und/oder die Reisegeschwindigkeit zu erhöhen. Gerade bei Mountainbikern scheint das Interesse an elektrisch unterstützten Mountainbikes zu wachsen.

Eine zu lösende Aufgabe besteht darin, ein verbessertes System mit einer Fahrradnabe bereitzustellen, beispielsweise ein System, das besonders einfach zu montieren ist und/oder das besonders robust ist. Weitere zu lösende Aufgaben bestehen darin, ein Fahrrad mit einem solchen System und ein Verfahren zur Montage eines solchen Systems anzugeben.

Dokument US2016/075225A1 zeigt ein System aufweisend eine Fahrradnabe.

Zunächst wird die Fahrradnabe angegeben. Die Fahrradnabe ist beispielsweise eine Hinterradfahrradnabe. Insbesondere kann die Fahrradnarbe ein Hinterradnabenantrieb sein.

In mindestens einer Ausführungsform weist die Fahrradnabe ein Nabenelement, ein Nabengehäuse, eine Schnittstelle und ein elektrisches Bauteil auf. Das elektrische Bauteil ist mit der Schnittstelle elektrisch verbunden. Das Nabengehäuse ist relativ zum Nabenelement rotierbar um eine Rotationsachse gelagert, um im Betrieb zusammen mit einem Rad eines Fahrrads zu rotieren. Die Schnittstelle ist an einer Außenseite der Fahrradnabe angeordnet und starr mit dem Nabenelement verbunden. Die Schnittstelle ist gegenüber der Rotationsachse radial nach außen versetzt. Ferner ist die Schnittstelle für eine elektrische und mechanische Kopplung der Fahrradnabe mit einem Kopplungselement eingerichtet, derart, dass über die Kopplung einerseits eine elektrische Verbindung vom Kopplungselement zum elektrischen Bauteil hergestellt ist und andererseits über die Kopplung eine relative Rotation zwischen dem Nabenelement und dem Kopplungselement blockiert ist.

Der vorliegenden Erfindung liegt unter anderem die Erkenntnis zu Grunde, dass eine Fahrradnabe mit elektrischem Bauteil, zum Beispiel einem Elektromotor, einerseits eine elektrische Verbindung und andererseits eine mit der Fahrradnabe verbundene Drehmomentabstützung benötigt. Die Erfinder hatten die Idee, eine funktionale Kombination aus elektrischer Verbindung und Drehmomentabstützung zu realisieren. Um die Kräfte auf die Schnittstelle bei der Drehmomentübertragung nicht zu groß werden zu lassen, wird die Schnittstelle radial entfernt von der Rotationsachse angeordnet. Über die Schnittstelle kann dann die Fahrradnabe mit einem passenden (externen) Kopplungselement elektrisch und mechanisch gekoppelt werden, wobei das Kopplungselement in Bezug auf eine Rotation um die Rotationsachse unbeweglich mit dem Nabenelement verbunden ist. So kann ein auf das Nabenelement wirkendes Drehmoment auf das Kopplungselement übertragen werden. Wird das Kopplungselement dann beispielsweise am Fahrradrahmen eines Fahrrads fixiert, kann über das Kopplungselement das von dem Nabenelement übertragende Drehmoment auf den Fahrradrahmen abgeleitet werden.

Eine solche Fahrradnabe ermöglicht zudem eine einfache Montage der Fahrradnabe an einem Fahrradrahmen, zum Beispiel auch in Kombination mit einer Steckachse. Auch ein einfaches elektrisches Verbinden des elektrischen Bauteils während der Montage ist ermöglicht. Durch die robuste, starr mit dem Nabenelement verbundene Ausführung der Schnittstelle kann das entsprechend konstruierte Kopplungselement gleichzeitig als Drehmomentstütze eingesetzt werden. Die Schnittstelle ist durch ihre Positionierung und Kopplung mit dem Kopplungselement gegen mechanische Schäden geschützt. Die Schnittstelle bildet außerdem eine robuste elektrische Verbindungsstelle an der Fahrradnabe und ist gegen mechanische Schäden geschützt. Insbesondere dadurch, dass die Schnittstelle starr mit dem Nabenelement verbunden ist und nicht als bewegliches Ende eines aus der Fahrradnabe heraushängenden Kabels realisiert ist, ist die Gefahr einer Beschädigung der elektrischen Verbindung zum elektrischen Bauteil während der Montage und Demontage reduziert. Mithilfe der Schnittstelle, die vorliegend eine Doppelfunktion erfüllt, wird eine Drehmomentstütze im komplizierten und empfindlichen Bereich der Nabenachse vermieden.

Das Nabenelement und das Nabengehäuse sind jeweils robuste Bauteile, zum Beispiel aus Metall und/oder Kunststoff. Das Nabenelement ist zum Beispiel starr mit einer Nabenachse der Fahrradnabe verbunden oder zumindest in Rotationsrichtung unbeweglich mit der Nabenachse verbunden/gekoppelt. Das Nabenelement kann ein Teil der Nabenachse sein, zum Beispiel einstückig mit der Nabenachse gebildet sein, oder es kann ein von der Nabenachse separates Element sein. Das Nabenelement kann einstückig gebildet sein. Beispielsweise bildet das Nabenelement eine Wandung, die das elektrische Bauteil bei Blickrichtung in axialer Richtung zumindest teilweise überdeckt. Der Radius des Nabenelements ist insbesondere größer als der mittlere Radius der Nabenachse. Der Radius des Nabenelements beträgt beispielsweise zumindest 50 % oder zumindest 75 % des maximalen Radius des Nabengehäuses.

Hier und im Folgenden wird unter einer axialen Richtung eine Richtung parallel zur Rotationsachse verstanden. Radiale Richtungen sind entsprechend Richtungen senkrecht zur Rotationsachse, die die Rotationsachse schneiden. Eine azimutale Richtung oder Rotationsrichtung ist eine Richtung senkrecht zur radialen Richtung und zur axialen Richtung.

Das Nabengehäuse ist relativ zum Nabenelement rotierbar um die Rotationsachse, insbesondere um die Nabenachse, gelagert. Vorliegend wird unter der Rotationsachse die geometrische beziehungsweise mathematische Achse verstanden, um die das Nabengehäuse relativ zum Nabenelement und/oder zur Nabenachse rotiert. Die Nabenachse ist das mechanische Bauteil, das für eine starre Verbindung zum Rahmen des Fahrrads eingerichtet ist. Beispielsweise umgibt das Nabengehäuse das elektrische Bauteil radial vollständig. Insbesondere kann das elektrische Bauteil bei Blickrichtung radial nach innen vollständig von dem Nabengehäuse überdeckt sein.

Um das Rotieren des Nabengehäuses relativ zum Nabenelement zu ermöglichen, weist die Fahrradnabe zum Beispiel ein oder mehrere Wälzlager auf. Zumindest ein Wälzlager kann zwischen dem Nabengehäuse und dem Nabenelement realisiert sein. Zum Beispiel bilden das Nabenelement und das Nabengehäuse dann Innenring und Außenring dieses Wälzlagers. Weiter kann die Fahrradnabe einen oder mehrere Freiläufe und/oder eine Aufnahme für einen Zahnkranz aufweisen.

Das Nabengehäuse ist dazu eingerichtet, im Betrieb zusammen mit einem Rad des Fahrrads zu rotieren. Zum Beispiel weist das Nabengehäuse Verbindungsstellen für die Verbindung mit Speichen des Fahrrads auf, zum Beispiel Speichenflansche. Insbesondere ist das Nabengehäuse dazu eingerichtet, starr mit dem (Hinter-)Rad des Fahrrads verbunden zu werden.

Das elektrische Bauteil ist mit der Schnittstelle elektrisch verbunden. Beispielsweise ist ein Kabel von der Schnittstelle zum elektrischen Bauteil geführt. Das Kabel kann radial vollständig von dem Nabengehäuse umgeben sein. Von außerhalb der Fahrradnabe sind das elektrische Bauteil und/oder das Kabel beispielsweise nicht einsehbar.

Die Schnittstelle ist an einer Außenseite der Fahrradnabe angeordnet und starr mit dem Nabenelement verbunden. Das heißt, die Schnittstelle ist unbeweglich relativ zum Nabenelement. Beispielsweise ist die Schnittstelle an dem Nabenelement angeordnet oder in das Nabenelement integriert.

Im unmontierten Zustand der Fahrradnabe ist die Schnittstelle von außerhalb der Fahrradnabe bevorzugt frei zugänglich.

Die Schnittstelle ist gegenüber der Rotationsachse radial nach außen versetzt. Beispielsweise ist ein Zentrum, insbesondere ein geometrisches Zentrum, der Schnittstelle oder der der Rotationsachse nächste Punkt der Schnittstelle zumindest 2 cm oder zumindest 3 cm oder zumindest 4 cm in radialer Richtung von der Rotationsachse entfernt.

An der Schnittstelle ist die Fahrradnabe mit einem zur Schnittstelle passenden (externen) Kopplungselement koppelbar. Die Schnittstelle ist sowohl für eine elektrische als auch eine mechanische Kopplung mit dem Kopplungselement eingerichtet. Wenn die Kopplung zwischen dem externen Kopplungselement und der Fahrradnabe über die Schnittstelle hergestellt ist, ist das Kopplungselement zumindest in Bezug auf eine Bewegung entlang der Rotationsrichtung unbeweglich mit der Schnittstelle beziehungsweise dem Nabenelement gekoppelt/verbunden. Das heißt, bei hergestellter Kopplung ist eine relative Rotation zwischen dem Kopplungselement und der Schnittstelle beziehungsweise dem Nabenelement blockiert. Dadurch kann ein auf das Nabenelement wirkendes Drehmoment über die Schnittstelle auf das externe Kopplungselement übertragen werden.

"Blockiert" bedeutet hierbei, dass eine freie Rotation blockiert ist. Eine geringe, relative Bewegung aufgrund von Spiel ist möglich. Zum Beispiel ist die mechanische Kopplung zwischen dem Kopplungselement und der Fahrradnabe eine formschlüssige und/oder kraftschlüssige Verbindung, wie eine Steckverbindung. Diese Verbindung kann die relative Rotation blockieren, hat aber meist ein geringes Spiel.

Über die Schnittstelle ist zudem eine elektrische Verbindung zwischen dem externen Kopplungselement und dem elektrischen Bauteil eingerichtet. Die elektrische Verbindung ist zum Beispiel zur Stromversorgung des elektrischen Bauteils und/oder für die Versorgung des elektrischen Bauteils mit Steuersignalen eingerichtet.

Die Kopplung zwischen dem Kopplungselement und der Fahrradnabe über die Schnittstelle ist bevorzugt reversibel. Anders ausgedrückt, ist die Schnittstelle für eine reversible Kopplung eingerichtet.

Gemäß zumindest einer Ausführungsform ist die Schnittstelle durch einen ersten Steckverbinder gebildet. Der erste Steckverbinder ist mit einem zweiten Steckverbinder ineinandersteckbar. Einer des ersten und zweiten Steckverbinders ist ein weiblicher Steckverbinder und der andere ein männlicher Steckverbinder.

Der erste Steckverbinder ist also Teil der Fahrradnabe und insbesondere starr mit dem Nabenelement verbunden. Der zweite Steckverbinder ist das externe Kopplungselement. Durch Ineinanderstecken des ersten und zweiten Steckverbinders wird die mechanische und elektrische Kopplung hergestellt.

Gemäß zumindest einer Ausführungsform ist der erste Steckverbinder für ein Ineinanderstecken mit dem zweiten Steckverbinder in axialer Richtung, das heißt in Richtung parallel zur Rotationsachse, eingerichtet. Anders ausgedrückt werden während des Ineinandersteckens die beiden Steckverbinder in axiale Richtung, zum Beispiel ausschließlich in axiale Richtung, relativ zueinander bewegt.

Gemäß zumindest einer Ausführungsform ist der erste Steckverbinder eine Buchse in der Fahrradnabe, zum Beispiel in dem Nabenelement. Die Schnittstelle ist dann zum Beispiel durch ein freiliegendes Ende der Buchse gebildet. Alternativ könnte der erste Steckverbinder auch ein Einbaustecker in der Fahrradnabe, zum Beispiel in dem Nabenelement, sein. Auch in diesem Fall wäre die Schnittstelle dann durch das freiliegende Ende des Steckverbinders gebildet.

Die Schnittstelle kann aber auch anders als durch einen Steckverbinder realisiert sein. Zum Beispiel könnte die Schnittstelle eine Schnittstelle für eine kontaktlose elektrische und mechanische Kopplung zum Kopplungselement sein. Die Schnittstelle könnte für eine mechanische Kopplung durch elektromagnetische Wechselwirkung eingerichtet sein. Insbesondere könnte die Schnittstelle der Wirkbereich eines Magneten der Fahrradnabe sein. Wenn das Kopplungselement auch einen Magneten aufweist, könnte eine mechanische Kopplung durch magnetische Wechselwirkung erreicht werden.

Die Schnittstelle könnte auch eine LWL-Schnittstelle für die Übertragung von optischen Signalen sein. Zum Beispiel können optische Signale für die Steuerung des elektrischen Bauteils über die Schnittstelle übertragen werden.

Gemäß zumindest einer Ausführungsform ist das elektrische Bauteil ein Elektromotor, der dazu eingerichtet ist, das Nabengehäuse relativ zum Nabenelement zu rotieren. Der Elektromotor ist insbesondere vom Nabengehäuse umgeben, zum Beispiel von außerhalb der Fahrradnabe nicht einsehbar. Ein Rotor des Elektromotors kann starr mit dem Nabengehäuse verbunden sein und ein Stator des Elektromotors kann starr mit dem Nabenelement verbunden sein. Beim Betrieb des Elektromotors wird neben dem auf das Nabengehäuse übertragenen Drehmoment ein (unerwünschtes) Drehmoment auf das Nabenelement übertragen, das dann beispielsweise auf das an der Schnittstelle gekoppelte Kopplungselement übertragen wird.

Die Fahrradnabe kann weiter ein Getriebe, wie ein Planetengetriebe, umfassen, um das von dem Elektromotor erzeugte Drehmoment auf das Nabengehäuse zu übertragen.

Gemäß zumindest einer Ausführungsform ist die Schnittstelle an einer in axialer Richtung gerichteten Außenfläche der Fahrradnabe angeordnet. Beispielsweise bildet das Nabenelement eine kreisförmige oder ringförmige Außenfläche der Fahrradnabe. Eine Normale auf diese Außenfläche verläuft zum Beispiel parallel oder im Wesentlichen parallel, beispielsweise in einem spitzen Winkel von höchstens 30°, zur Rotationsachse. An dieser Außenfläche kann die Schnittstelle angeordnet sein.

Als nächstes wird das System angegeben. Das System ist beispielsweise ein Teil eines Fahrrads oder ist dazu vorgesehen, mit weiteren Fahrradkomponenten zu einem Fahrrad zusammengebaut zu werden.

In mindestens einer Ausführungsform umfasst das System eine Fahrradnabe nach einem der hier beschriebenen Ausführungsformen, ein Rahmenelement und ein Kopplungselement. Die Fahrradnabe ist mit dem Rahmenelement derart mechanisch gekoppelt, dass das Nabengehäuse relativ zum Rahmenelement und relativ zum Nabenelement um die Rotationsachse rotierbar ist. Das Kopplungselement ist über die Schnittstelle elektrisch und mechanisch mit der Fahrradnabe gekoppelt. Außerdem ist das Kopplungselement mit dem Rahmenelement mechanisch gekoppelt. Mithilfe der über die Schnittstelle hergestellten elektrischen Kopplung zwischen dem Kopplungselement und der Fahrradnabe ist eine elektrische Verbindung vom Kopplungselement zum elektrischen Bauteil hergestellt. Zudem ist mithilfe der über die Schnittstelle hergestellten mechanischen Kopplung zwischen dem Kopplungselement und der Fahrradnabe und mithilfe der mechanischen Kopplung zwischen dem Kopplungselement und dem Rahmenelement eine Drehmomentstütze für die Fahrradnabe realisiert.

Da das System eine Fahrradnabe nach einer der hier beschriebenen Ausführungsformen aufweist, sind alle im Zusammenhang mit der Fahrradnabe offenbarten Merkmale auch für das System offenbart und umgekehrt. Bei dem Kopplungselement des Systems handelt es sich insbesondere um das im Zusammenhang mit der Fahrradnabe beschriebene (externe) Kopplungselement.

Die mechanische Kopplung zwischen der Fahrradnabe und dem Rahmenelement, die ein Rotieren des Nabengehäuses ermöglicht, ist eine separate mechanische Kopplung, die nicht über die Schnittstelle beziehungsweise das Kopplungselement erzeugt wird. Die Kopplung zwischen der Fahrradnabe und dem Rahmenelement ist beispielsweise eine direkte Verbindung der Nabenachse mit dem Rahmenelement. Insbesondere können die Nabenachse und/oder das Nabenelement starr mit dem Rahmenelement verbunden sein.

Das Rahmenelement kann der Fahrradrahmen sein oder das Rahmenelement kann Teil eines Fahrradrahmens oder ein Teil für einen Fahrradrahmen sein.

Die mechanische Kopplung zwischen dem Kopplungselement und der Fahrradnabe und/oder die mechanische Kopplung zwischen dem Kopplungselement und dem Rahmenelement sind beispielsweise jeweils eine formschlüssige und/oder kraftschlüssige Verbindung. Zum Beispiel greift das Kopplungselement in das Rahmenelement und/oder in die Fahrradnabe ein.

Durch die mechanische Kopplung zwischen dem Kopplungselement und der Fahrradnabe wird ein im Betrieb auf das Nabenelement wirkendes Drehmoment auf das Kopplungselement übertragen. Durch die mechanische Kopplung zwischen dem Kopplungselement und dem Rahmenelement wird dann das Drehmoment vom Kopplungselement auf das Rahmenelement übertragen, sodass das Drehmoment insgesamt auf das Rahmenelement abgeleitet wird.

Anders ausgedrückt überträgt das Kopplungselement also das Drehmoment von der Fahrradnabe auf das Rahmenelement und wirkt somit als Drehmomentübertragungselement. Das Kopplungselement ist entsprechend stabil beziehungsweise steif ausgebildet, um das Drehmoment zu übertragen. Außer dem Kopplungselement wird beispielsweise keine weitere Drehmomentstütze zur Ableitung des Drehmoments auf das Rahmenelement verwendet.

Die über die Schnittstelle hergestellte mechanische Kopplung zwischen dem Kopplungselement und der Fahrradnabe zusammen mit der Kopplung zwischen Kopplungselement und Rahmenelement ist bevorzugt so ausgeführt, dass die Fahrradnabe in Position relativ zum Rahmenelement gehalten wird, auch wenn die (separate) mechanische Kopplung zwischen der Fahrradnabe und dem Rahmenelement gelöst ist. Das heißt, die über das Kopplungselement hergestellte mechanische Kopplung zwischen Fahrradnabe und Rahmenelement ist stark genug, um die Fahrradnabe auch dann in Position zu halten.

Gemäß der Erfindung, ist das Kopplungselement ein Steckverbinder und die mechanische und elektrische Kopplung zwischen dem Kopplungselement und der Fahrradnabe eine Steckverbindung.

Gemäß der Erfindung, erstreckt sich ein Steckergehäuse zusammenhängend zwischen dem Rahmenelement und der Fahrradnabe und ragt sowohl in das Rahmenelement als auch in die Fahrradnabe zumindest hinein. Das Steckergehäuse kann Teil des Kopplungselements oder Teil der Fahrradnabe sein.

Gemäß der Erfindung, umgibt das Steckergehäuse elektrische Leiter der elektrischen Verbindung. Zum Beispiel umgibt das Steckergehäuse einen Steckerkontakt und/oder einen Buchsenkontakt der elektrischen Verbindung.

Gemäß der Erfindung, ist das Steckergehäuse stabil genug gebildet, um zumindest einen Teil des beim Betrieb der Fahrradnabe auf das Nabenelement wirkenden Drehmoments auf das Rahmenelement abzuleiten. Das heißt, das Steckergehäuse hält den Kräften, die beim Ableiten des Drehmoments auftreten, stand und verformt sich beim Übertragen des Drehmoments beispielsweise nicht oder nur geringfügig und dann insbesondere reversibel. Zum Beispiel ist das Steckergehäuse stabil genug, um das gesamte auf das Nabenelement wirkende Drehmoment auf das Rahmenelement abzuleiten.

Gemäß zumindest einer Ausführungsform ist das Steckergehäuse aus einem Hartplastik und/oder Metall gebildet.

Gemäß zumindest einer Ausführungsform ist das Kopplungselement ein Stecker. Das Steckergehäuse ist dann beispielsweise das Gehäuse des Steckers.

Gemäß zumindest einer Ausführungsform ist der Stecker ein Winkelstecker.

Gemäß zumindest einer Ausführungsform ist das Kopplungselement durch ein Loch im Rahmenelement geführt. Eine das Loch begrenzende Seitenwand des Rahmenelements bildet einen Anschlag für das Kopplungselement, mit Hilfe dessen die Drehmomentstütze realisiert ist. Insbesondere begrenzt die Seitenwand das Loch also in Rotationsrichtung. Wird das Drehmoment auf das Kopplungselement übertragen, so wird eine Rotation des Kopplungselements um die Rotationsachse durch das Anschlagen gegen die Seitenwand des Lochs blockiert.

Gemäß zumindest einer Ausführungsform überlappt, in Blickrichtung parallel zur Rotationsachse, die Schnittstelle mit dem Loch. Das heißt, bei nicht hindurchgeführtem Kopplungselement ist die Schnittstelle in dieser Blickrichtung durch das Loch hindurch zumindest teilweise einsehbar oder zugänglich. In der beschriebenen Blickrichtung ist das Loch beispielsweise rund, insbesondere kreisförmig, gebildet.

Gemäß zumindest einer Ausführungsform ist das Kopplungselement in eine Ausnehmung des Rahmenelements aufgenommen. Eine die Ausnehmung begrenzende Seitenwand des Rahmenelements bildet einen Anschlag für das Kopplungselement, mit Hilfe dessen die Drehmomentstütze realisiert ist. Im Unterschied zu dem Loch ist die Ausnehmung seitlich nicht vollständig von dem Rahmenelement umgeben. Eine solche Ausnehmung kann besonders einfach realisiert werden, ohne die Stabilität des Rahmenelements zu beeinflussen. Im Übrigen ist die Ausnehmung aber bevorzugt auch so gebildet, dass das das Drehmoment aufnehmende Kopplungselement durch Anschlagen an die die Ausnehmung begrenzende Seitenwand an einer Rotation um die Rotationsachse gehindert ist.

Gemäß zumindest einer Ausführungsform überlappt in Blickrichtung parallel zur Rotationsachse die Ausnehmung mit der Schnittstelle. Das heißt, bei nicht aufgenommenem Kopplungselement ist die Schnittstelle in dieser Blickrichtung im Bereich der Ausnehmung zumindest teilweise einsehbar oder zugänglich. In der beschriebenen Blickrichtung ist die Ausnehmung beispielsweise viereckig, insbesondere schiefwinklig parallelogrammförmig, gebildet. Zum Beispiel bildet das Rahmenelement drei Seiten der viereckigen Ausnehmung und an der vierten Seite ist die Ausnehmung offen, zum Beispiel nach unten hin offen.

Gemäß zumindest einer Ausführungsform ist das Kopplungselement an einem Ende eines Kabels angeordnet. Das Kopplungselement ist beispielsweise über das Kabel mit einer Batterie beziehungsweise einem Akkumulator und/oder einer Steuereinheit elektrisch verbunden.

Gemäß zumindest einer Ausführungsform verläuft das Kabel zumindest abschnittsweise im Inneren des Rahmenelements. Insbesondere kann das Rahmenelement als Hohlkörper gebildet sein. Das Kabel verläuft dann zum Beispiel in einem tunnelförmigen Abschnitt des Rahmenelements, zum Beispiel entlang einer Längserstreckungsrichtung des tunnelförmigen Abschnitts.

Gemäß zumindest einer Ausführungsform verläuft das Kabel ausgehend vom Kopplungselement zunächst außerhalb des Rahmenelements, ist dann durch eine Öffnung im Rahmenelement ins Innere des Rahmenelements geführt und verläuft von da an zumindest abschnittsweise im Inneren des Rahmenelements. Zum Beispiel ist die Übergangsstelle, an der das Kabel in das Kopplungselement übergeht, auf einer der Fahrradnabe gegenüberliegenden Seite des Rahmenelements angeordnet. Das heißt, das Rahmenelement ist in Richtung parallel zur Rotationsachse zwischen der Übergangsstelle und der Fahrradnabe angeordnet. Die Öffnung für das Kabel ist zum Beispiel eine von dem Loch oder der Ausnehmung für das Kopplungselement separate Öffnung. Die Öffnung kann von dem Loch/der Ausnehmung beabstandet sein.

Als nächstes wird das Fahrrad angegeben. Bei dem Fahrrad handelt es sich insbesondere um ein Elektrofahrrad, zum Beispiel um ein so genanntes Pedelec.

In mindestens einer Ausführungsform umfasst das Fahrrad ein System nach einem der hier beschriebenen Ausführungsformen. Folglich sind alle im Zusammenhang mit dem System offenbarten Merkmale auch für das Fahrrad offenbart und umgekehrt. Die Fahrradnabe bildet zum Beispiel einen Hinterradnabenantrieb.

Gemäß zumindest einer Ausführungsform umfasst das Fahrrad eine Steuereinheit und/oder einen Akkumulator, die über die an der Schnittstelle hergestellte Kopplung zwischen dem Kopplungselement und der Fahrradnabe elektrisch mit der Fahrradnabe verbunden ist.

Über die Steuereinheit können beispielsweise Steuersignale an das elektrische Bauteil in der Fahrradnabe übertragen werden, zum Beispiel Motorsteuersignale.

Als nächstes wird das Verfahren zur Montage einer Fahrradnabe angegeben. Durch das Verfahren kann beispielsweise das hier beschriebene System hergestellt werden. Alle im Zusammenhang mit dem System offenbarten Merkmale sind daher auch für das Verfahren offenbart und umgekehrt.

In mindestens einer Ausführungsform wird bei dem Verfahren eine Fahrradnabe nach einem der hier beschriebenen Ausführungsformen bereitgestellt. Außerdem werden ein Rahmenelement und ein Kopplungselement bereitgestellt. In einem nächsten Schritt wird die Fahrradnabe mit dem Rahmenelement derart mechanisch gekoppelt, dass das Nabengehäuse relativ zum Rahmenelement und relativ zum Nabenelement um die Rotationsachse rotierbar ist. Weiter wird das Kopplungselement elektrisch und mechanisch über die Schnittstelle mit der Fahrradnabe gekoppelt. Ferner wird das Kopplungselement mit dem Rahmenelement mechanisch gekoppelt. Dabei wird mithilfe der über die Schnittstelle hergestellten elektrischen Kopplung zwischen dem Kopplungselement und der Fahrradnabe eine elektrische Verbindung vom Kopplungselement zum elektrischen Bauteil hergestellt und mithilfe der über die Schnittstelle hergestellten mechanischen Kopplung zwischen dem Kopplungselement und der Fahrradnabe und mithilfe der mechanischen Kopplung zwischen dem Kopplungselement und dem Rahmenelement eine Drehmomentstütze für die Fahrradnabe realisiert.

Die mechanische Kopplung zwischen dem Kopplungselement und dem Rahmenelement wird beispielsweise dadurch hergestellt, dass das Kopplungselement in formschlüssigen Eingriff mit dem Rahmenelement gebracht wird. Beispielsweise wird das Kopplungselement von einer der Fahrradnabe abgewandten Seite des Rahmenelements durch das Loch beziehungsweise die Ausnehmung in das Rahmenelement geschoben und dann über die Schnittstelle mit der Fahrradnabe gekoppelt. Auch das Koppeln zwischen Kopplungselement und Fahrradnabe kann dadurch erfolgen, dass das Kopplungselement an der Schnittstelle in formschlüssigen Eingriff mit der Fahrradnabe gebracht wird.

Der Schritt des mechanischen Koppelns der Fahrradnabe mit dem Rahmenelement kann vor oder nach dem Koppeln der Fahrradnabe mit dem Kopplungselement erfolgen. Zum Beispiel wird die Fahrradnabe mit dem Rahmenelement verschraubt oder mithilfe einer Schnellspannachse verbunden. Alternativ kann die Kopplung auch über eine Steckachse erfolgen.

Der Schritt des Koppelns des Kopplungselements mit dem Rahmenelement erfolgt beispielsweise gleichzeitig mit dem Schritt des Koppelns des Kopplungselements mit der Fahrradnabe.

Nachfolgend werden eine hier beschriebene Fahrradnabe, ein hier beschriebenes System, ein hier beschriebenes Fahrrad sowie ein hier beschriebenes Verfahren zur Montage einer Fahrradnabe unter Bezugnahme auf Zeichnungen anhand von Ausführungsbeispielen näher erläutert. Gleiche Bezugszeichen geben dabei gleiche Elemente in den einzelnen Figuren an. Es sind dabei jedoch nicht zwangsläufig maßstäbliche Bezüge dargestellt, vielmehr können einzelne Elemente zum besseren Verständnis übertrieben groß dargestellt sein. Soweit Elemente oder Bauteile in den verschiedenen Figuren in ihrer Funktion übereinstimmen, wird ihre Beschreibung nicht für jede der folgenden Figuren wiederholt. Aus Gründen der Übersichtlichkeit sind Elemente möglicherweise nicht in allen Abbildungen mit entsprechenden Bezugszeichen versehen.

Es zeigen:
Figur 1 ein Ausführungsbeispiel eines Fahrrads,
Figur 2 ein Ausführungsbeispiel einer Fahrradnabe in Seitenansicht und Querschnittsansicht,
Figuren 3 bis 6 verschiedene Positionen in einem Ausführungsbeispiel des Verfahrens zur Montage einer Fahrradnabe,
Figuren 7 und 8 verschiedene Positionen in einem weiteren Ausführungsbeispiel des Verfahrens zur Montage einer Fahrradnabe,
Figur 9 ein Ausführungsbeispiel eines Kopplungselements,
Figur 10 ein Ausführungsbeispiel des Systems in einer Querschnittsansicht.

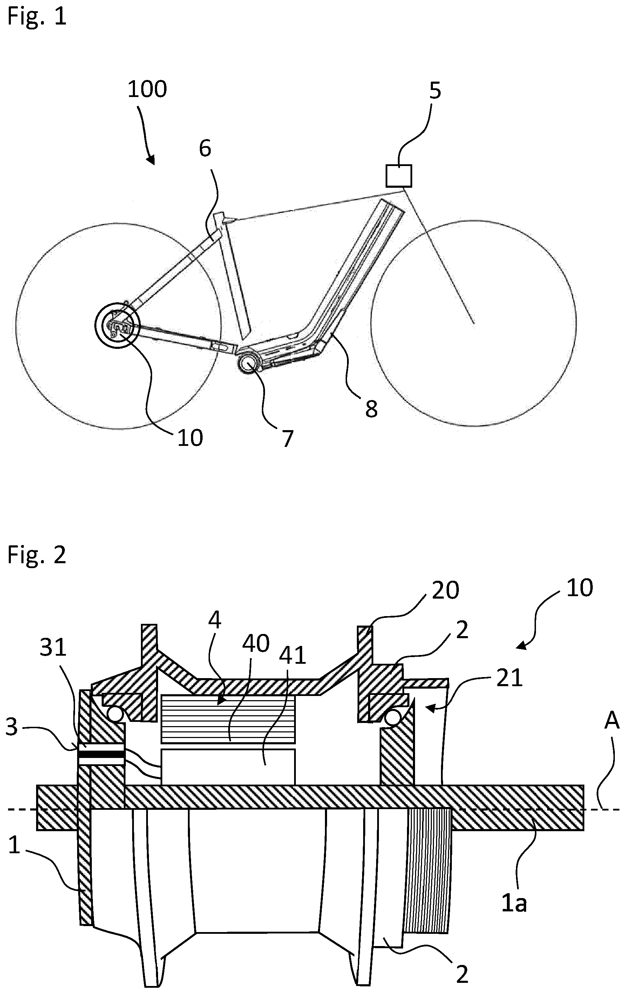

Figur 1 zeigt schematisch ein Elektrofahrrad 100 mit einem Fahrradrahmen 6, welcher sich in Richtung eines Tretlagers 7 und in Richtung einer hinteren Fahrradnabe 10 erstreckt. Die Fahrradnabe 10 ist elektrisch mit einer Steuereinheit 5 und einem Akkumulator 8 verbunden.

Begriffe, wie "vorne", "hinten", "oben", "unten", "rechts", "links", "außen" und "innen", beziehen sich auf Ausrichtungen oder Orientierungen jeweiliger Komponenten, wie sie in den Figuren illustriert sind und wie sie in einem betriebsbereiten Zustand des Elektrofahrrads 100 angeordnet sind. Das Elektrofahrrad 100 weist in der Regel ein Vorderrad und ein Hinterrad auf. Ein Außenbereich bezeichnet einen Bereich außerhalb des Elektrofahrrads 100.

In der Figur 2 ist die Fahrradnabe 10 der Figur 1 in einer zweiteiligen Ansicht dargestellt, wobei unterhalb der Rotationsachse A eine Seitenansicht auf die Fahrradnabe 10 gezeigt ist und oberhalb der Rotationsachse A eine Querschnittsansicht dargestellt ist.

Die Fahrradnabe 10 umfasst eine Nabenachse 1a, ein Nabenelement 1 und ein Nabengehäuse 2. Das Nabenelement 1 bildet vorliegend eine Wandlung, die zusammen mit dem Nabengehäuse 2 einen Innenraum umgibt, in dem ein elektrisches Bauteil 4 in Form eines Elektromotors 4 angeordnet ist.

Die Nabenachse 1a, das Nabenelement 1 und das Nabengehäuse 2 sind beispielsweise jeweils aus Metall gebildet. Das Nabenelement 1 ist hier starr mit der Nabenachse 1a verbunden, zum Beispiel mit der Nabenachse 1a verschweißt oder einstückig mit dieser gebildet.

Das Nabenelement 1 bildet eine in axialer Richtung, parallel zur Rotationsachse A, weisende Außenfläche der Fahrradnabe 10, an der eine Schnittstelle 3 für eine mechanische und elektrische Kopplung zu einem externen Kopplungselement angeordnet ist. Die Schnittstelle 3 ist starr mit dem Nabenelement 1 verbunden.

Das Nabengehäuse 2 ist rotierbar um die Rotationsachse A und relativ zum Nabenelement 1 angeordnet. Dafür sind in der Fahrradnabe 10 Wälzlager 21 vorgesehen. Das Nabengehäuse 2 ist hier zum Beispiel mit einem Rotor 40 des Elektromotors 4 gekoppelt und die Nabenachse 1a ist mit einem Stator 41 des Elektromotors 4 gekoppelt. Zwischen das Nabengehäuse 2 und den Elektromotor 4 kann ein Getriebe (nicht dargestellt) geschaltet sein.

Im Betrieb des Elektromotors 4 rotiert der Rotor 40 relativ zum Stator 41 um die Rotationsachse A und treibt dadurch das Nabengehäuse 2 zur Rotation um die Rotationsache A beziehungsweise um die Nabenachse 1a an. Das Nabengehäuse 2 umfasst Speichenflansche 20 für die Verbindung mit Speichen eines Rads, so dass im Betrieb das Nabengehäuse 2 zusammen mit dem Hinterrad des Elektrofahrrads 100 rotiert.

In dem vorliegenden Ausführungsbeispiel ist die Schnittstelle 3 durch einen Steckverbinder 31 in Form einer Buchse gebildet, die in das Nabenelement 1 integriert beziehungsweise eingelassen ist. Die Schnittstelle 3 ist elektrisch mit dem Elektromotor 4 verbunden. Über die Schnittstelle 3 werden beispielsweise elektrische Steuersignale zur Steuerung oder elektrischer Strom zur Stromversorgung des Elektromotors 4 an die Fahrradnabe 10 übertragen.

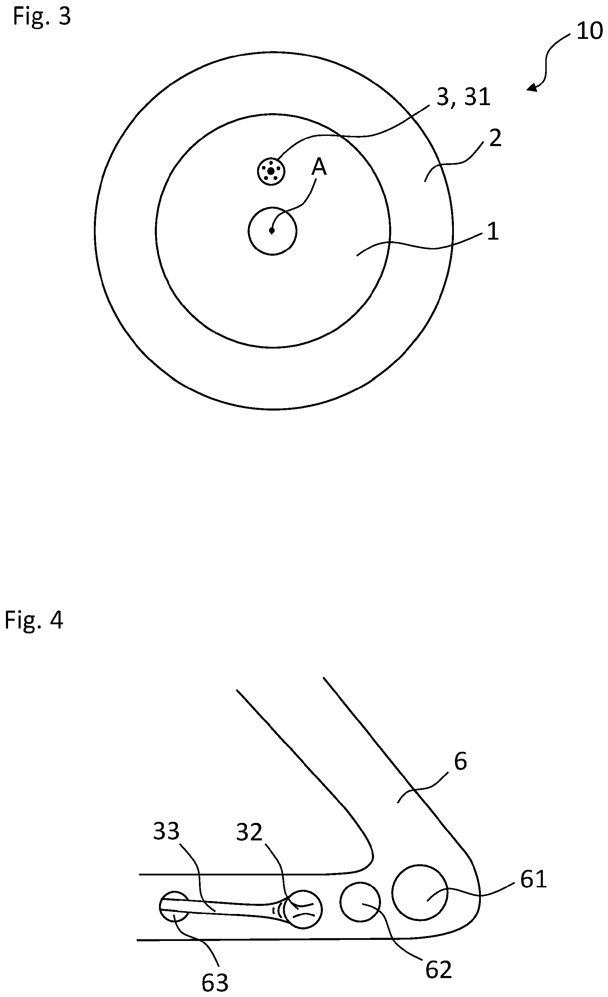

Figur 3 zeigt eine erste Position in einem Ausführungsbeispiel des Verfahrens zur Montage einer Fahrradnabe. Hier ist die Fahrradnabe 10 der Figur 2 bereitgestellt und in einer Seitenansicht bei Blickrichtung entlang der Rotationsachse A dargestellt. Wie gut zu erkennen ist, ist die Schnittstelle 3 beziehungsweise die Buchse 31 bezüglich der Rotationsachse A radial nach außen versetzt, zum Beispiel um zumindest 3 cm.

Figur 4 zeigt eine weitere Position, in der ein Rahmenelement 6, vorliegend der hintere Teil des Fahrradrahmens 6 der Figur 1, bereitgestellt ist. Im hinteren Abschnitt des Rahmenelements 6 ist eine Durchführung 61 zur Aufnahme der Nabenachse 1a der Fahrradnabe 10 vorgesehen. Etwas weiter vorne ist ein Loch 62 in dem Rahmenelement 6 vorgesehen. Das Loch 62 ist in axialer Richtung vollständig durch das Rahmenelement 6 geführt. Noch weiter vorne ist eine Öffnung 63 im Rahmenelement 6 vorgesehen. Die Öffnung 63 bildet einen Zugang zu einem inneren, tunnelförmigen Bereich des Rahmenelements 6. Aus der Öffnung 63 ragt ein Kabel 33 hinaus. Das Kabel 33 ist abschnittsweise im inneren, tunnelförmigen Bereich des Rahmenelements 6 geführt. An einem Ende des aus dem Rahmenelement 6 herausragenden Teils des Kabels 33 ist ein Steckverbinder 32 in Form eines Steckers 32 vorgesehen.

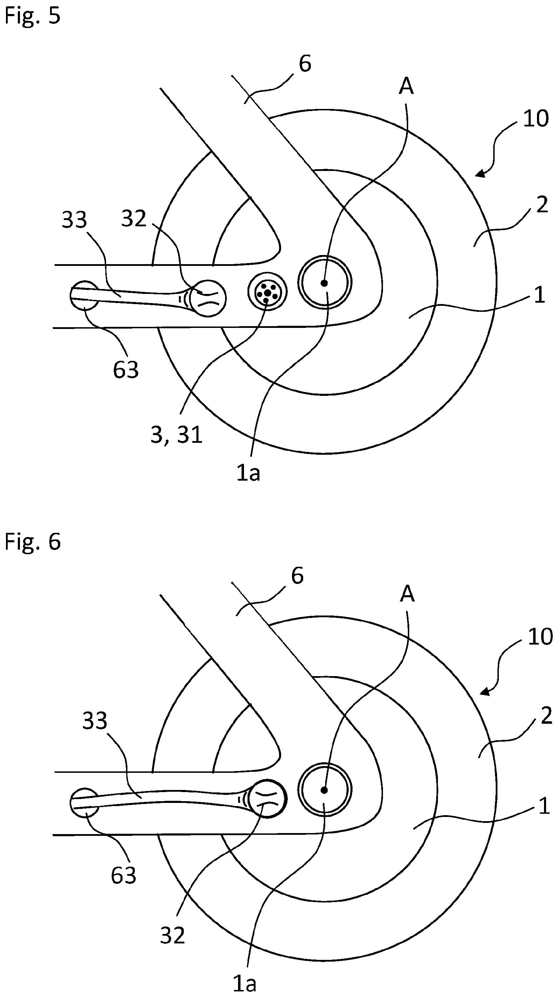

In der Figur 5 ist eine Position in dem Verfahren gezeigt, bei der die Fahrradnabe 10 der Figuren 2 und 3 mit dem Rahmenelement 6 mechanisch gekoppelt ist, indem die Nabenachse 1a durch die Durchführung 61 geführt und starr mit dem Rahmenelement 6 verbunden ist. Außerdem ist zu erkennen, dass die Fahrradnabe 10 so ausgerichtet ist, dass, in der dargestellten Blickrichtung parallel zur Rotationsachse A, die Schnittstelle 3 der Fahrradnabe 10 mit dem Loch 62 in dem Rahmenelement 6 überlappt. Die Schnittstelle 3 ist dabei durch das Loch 62 sichtbar und über das Loch 62 zugänglich.

In der Figur 6 ist eine Position gezeigt, bei der der Stecker 32 durch das Loch 62 geführt und in die Schnittstelle 3 beziehungsweise in die Buchse 31 eingesteckt ist. Über die Schnittstelle 3 sind also der Stecker 32 und die Fahrradnabe 10 miteinander sowohl elektrisch als auch mechanisch gekoppelt. Durch den formschlüssigen Eingriff des Steckers 32 in das Loch 62 des Rahmenelements 6 ist auch eine mechanische Kopplung zwischen dem Stecker 32 und dem Rahmenelement 6 hergestellt.

Beim Antrieb der Fahrradnabe 10 mit Hilfe des Elektromotors 4 wird auf das Nabengehäuse 2 ein Drehmoment ausgeübt, das das Nabengehäuse 2 zur Rotation um die Rotationachse A veranlasst. Gleichzeitig wird aber auch ein Drehmoment auf die Nabenachse 1a und damit auf das Nabenelement 1 ausgeübt. Über die mechanische Kopplung zwischen Stecker 32 und Fahrradnabe 10 wird dieses Drehmoment auf den Stecker 32 übertragen. Der Stecker 32 ist durch den Eingriff in das Loch 62 im Rahmenelement 6 an einer Rotation um die Rotationsachse A gehindert. Da der Stecker 32 stabil und steif gebildet ist, ist mit Hilfe des Steckers 32 eine Drehmomentstütze für die Fahrradnabe 10 realisiert.

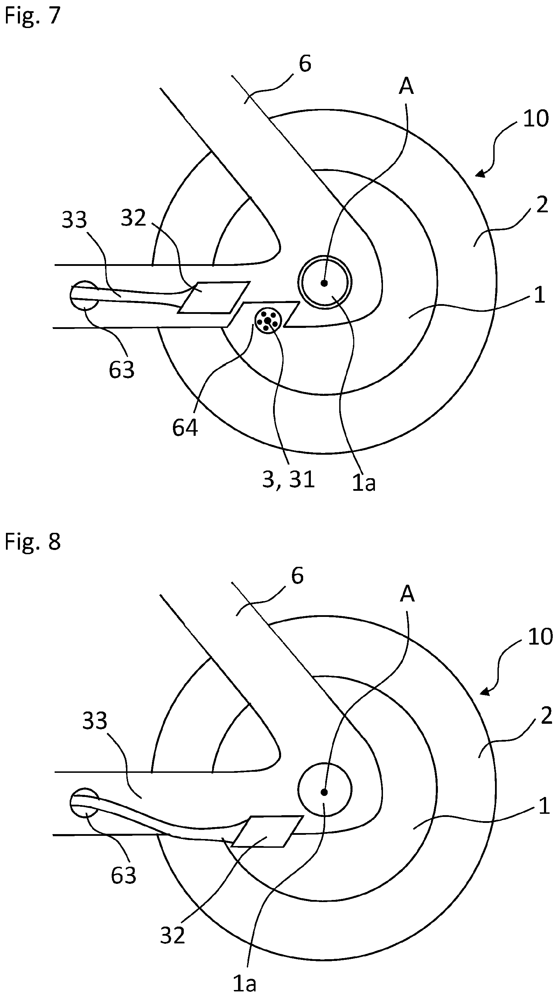

In der Figur 7 ist eine Position in einem weiteren Ausführungsbeispiel des Verfahrens zur Montage einer Fahrradnabe 10 gezeigt. Anders als in der Figur 5 ist hier kein Loch 62 im Rahmenelement 6 für die Durchführung eines Steckers vorgesehen, sondern eine Ausnehmung 64. Die Ausnehmung 64 ist am unteren Teil des Rahmenelements 6 angeordnet und weist in der gezeigten Draufsicht einen schiefwinklig parallelogrammförmigen Querschnitt auf. Ebenso weist der Stecker 32 in der Draufsicht einen schiefwinklig parallelogrammförmigen Querschnitt für einen formschlüssigen Eingriff in die Ausnehmung 64 auf.

Wenn, wie in der Figur 8 gezeigt, der Stecker 32 in der Ausnehmung 64 aufgenommen und in die Buchse 31 der Fahrradnabe 10 eingesteckt ist, wird beim Betrieb des Elektromotors 4 ein auf das Nabenelement 1 ausgeübtes Drehmoment auf den Stecker 32 übertragen. Dieser leitet durch den formschlüssigen Eingriff in die Ausnehmung 64 das Drehmoment an das Rahmenelement 6 ab. Insbesondere sind die Ausnehmung 64 und der Stecker 32 so aufeinander abgestimmt, dass, wenn diese ineinander eingreifen, eine Rotation des Steckers 32 um die Rotationsachse A relativ zum Rahmenelement 6 blockiert ist.

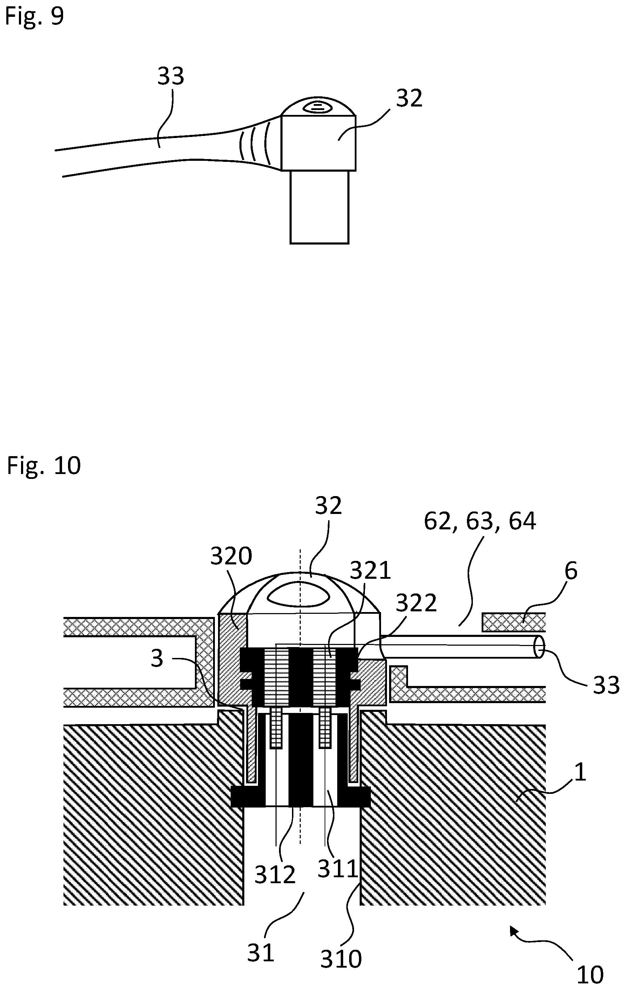

In der Figur 9 ist ein Ausführungsbeispiel des Kopplungselements 32 in einer Seitenansicht gezeigt. Hierbei handelt es sich um einen Stecker 32, zum Beispiel um den der Figuren 5 und 6. Der Stecker 32 ist ein Winkelstecker.

Figur 10 zeigt ein Ausführungsbeispiel des Systems, bei dem der Stecker 32 der Figur 9 durch ein Loch 62 oder eine Ausnehmung 64 im Rahmenelement 6 geführt und über die Schnittstelle 3 mit der Fahrradnabe 10 mechanisch und elektrisch gekoppelt ist.

Die Schnittstelle 3 der Fahrradnabe 10 ist hier wieder durch eine Buchse 31 der Fahrradnabe 10 gebildet. Das Buchsengehäuse 310 ist durch das Nabenelement 1 gebildet. Das Buchsengehäuse 310 umgibt den Buchsenkontakt 311 und den Buchseneinsatz 312 der Buchse 31.

Der Stecker 32 weist einen Steckerkontakt 321 und einen Steckereinsatz 322 auf. Der Steckerkontakt 321 und der Steckereinsatz 322 sind von einem Steckergehäuse 320 umgeben. Das Steckergehäuse 320 ist stabil gebildet, zum Beispiel aus Metall oder Hartplastik.

Das Steckergehäuse 320 ist in die Buchse 31 eingesteckt. Der Steckerkontakt 321 ist in den Buchsenkontakt 311 eingesteckt, wodurch die elektrische Verbindung hergestellt ist. Das Steckergehäuse 320 erstreckt sich zusammenhängend vom Rahmenelement 6 bis in das Nabenelement 1 und ragt sowohl in das Rahmenelement 6 als auch in das Nabenelement 1 hinein.

Während des Betriebs der Fahrradnabe 10 wird das auf das Nabenelement 1 ausgeübte Drehmoment dann überwiegend über das stabile Steckergehäuse 320 auf das Rahmenelement 6 übertragen.

### Bezugszeichenliste

- 1: Nabenelement
- 1a: Nabenachse
- 2: Nabengehäuse
- 3: Schnittstelle
- 4: elektrisches Bauteil
- 5: Steuereinheit
- 6: Rahmenelement/Fahrradrahmen
- 7: Tretlager
- 8: Akkumulator
- 10: Fahrradnabe
- 20: Speichenflansch
- 21: Wälzlager
- 31: erster Steckverbinder/Buchse
- 32: Kopplungselement/zweiter Steckverbinder/Stecker
- 33: Kabel
- 40: Rotor
- 41: Stator
- 61: Durchführung
- 62: Loch
- 63: Öffnung
- 64: Ausnehmung
- 100: Fahrrad
- 310: Buchsengehäuse
- 311: Buchsenkontakt
- 312: Buchseneinsatz
- 320: Steckergehäuse
- 321: Steckerkontakt
- 322: Steckereinsatz
- A: Rotationsachse

## Patentansprüche

1. System, aufweisend
- eine Fahrradnabe (10), aufweisend
- ein Nabenelement (1),
- ein Nabengehäuse (2),
- eine Schnittstelle (3), und
- ein elektrisches Bauteil (4), das mit der Schnittstelle (3) elektrisch verbunden ist, wobei
- das Nabengehäuse (2) relativ zum Nabenelement (1) rotierbar um eine Rotationsachse (A) gelagert ist, um im Betrieb zusammen mit einem Rad eines Fahrrads zu rotieren,
- die Schnittstelle (3) an einer Außenseite der Fahrradnabe (10) angeordnet ist und starr mit dem Nabenelement (1) verbunden ist,
- die Schnittstelle (3) gegenüber der Rotationsachse (A) radial nach außen versetzt ist,
- die Schnittstelle (3) für eine elektrische und mechanische Kopplung der Fahrradnabe (10) mit einem Kopplungselement (32) eingerichtet ist, derart, dass über die Kopplung einerseits eine elektrische Verbindung vom Kopplungselement (32) zum elektrischen Bauteil (4) hergestellt ist und andererseits durch die Kopplung eine relative Rotation zwischen dem Nabenelement (1) und dem Kopplungselement (32) blockiert ist,
- ein Rahmenelement (6),
- ein Kopplungselement (32), wobei
- die Fahrradnabe (10) mit dem Rahmenelement (6) derart mechanisch gekoppelt ist, dass das Nabengehäuse (2) relativ zum Rahmenelement (6) und relativ zum Nabenelement (1) um die Rotationsachse (A) rotierbar ist,
- das Kopplungselement (32) über die Schnittstelle (3) elektrisch und mechanisch mit der Fahrradnabe (10) gekoppelt ist,
- das Kopplungselement (32) mit dem Rahmenelement (6) mechanisch gekoppelt ist,
- mit Hilfe der über die Schnittstelle (3) hergestellten elektrischen Kopplung zwischen dem Kopplungselement (32) und der Fahrradnabe (10) eine elektrische Verbindung vom Kopplungselement (32) zum elektrischen Bauteil (4) hergestellt ist, das System ist **dadurch gekennzeichnet, dass**
- mit Hilfe der über die Schnittstelle (3) hergestellten mechanischen Kopplung zwischen dem Kopplungselement (32) und der Fahrradnabe (10) und mit Hilfe der mechanischen Kopplung zwischen dem Kopplungselement (32) und dem Rahmenelement (6) eine Drehmomentstütze für die Fahrradnabe (10) realisiert ist,
- das Kopplungselement (32) ein Steckverbinder ist und die mechanische und elektrische Kopplung zwischen dem Kopplungselement (32) und der Fahrradnabe (10) eine Steckverbindung ist,
- ein Steckergehäuse (320) sich zusammenhängend zwischen dem Rahmenelement (6) und der Fahrradnabe (10) erstreckt und sowohl in das Rahmenelement (6) als auch in die Fahrradnabe (10) zumindest hineinragt,
- das Steckergehäuse (320) elektrische Leiter (311, 321) der elektrischen Verbindung umgibt,
- das Steckergehäuse (320) stabil genug gebildet ist, um zumindest einen Teil des beim Betrieb der Fahrradnabe (10) auf das Nabenelement (1) wirkenden Drehmoments auf das Rahmenelement (6) abzuleiten.

2. System nach Anspruch 1, wobei
- die Schnittstelle (3) eine Buchse in der Fahrradnabe (10) ist.

3. System nach einem der vorhergehenden Ansprüche, wobei
- das elektrische Bauteil (4) ein Elektromotor (4) ist, der dazu eingerichtet ist, das Nabengehäuse (2) relativ zum Nabenelement (1) zu rotieren,
- der Elektromotor (4) von dem Nabengehäuse (2) umgeben ist.

4. System nach einem der vorhergehenden Ansprüche, wobei
- die Schnittstelle (3) an einer in axiale Richtung gerichteten Außenfläche der Fahrradnabe (10) angeordnet ist, wobei die axiale Richtung eine Richtung parallel zur Rotationsachse (A) ist.

5. System nach einem der vorhergehenden Ansprüche, wobei
- das Steckergehäuse (320) aus einem Hartplastik und/oder Metall gebildet ist.

6. System nach einem der vorhergehenden Ansprüche, wobei
- das Kopplungselement (32) ein Stecker ist,
- das Steckergehäuse (320) das Gehäuse des Steckers (32) ist.

7. System nach Anspruch 6, wobei
- der Stecker (32) ein Winkelstecker ist.

8. System nach einem der vorhergehenden Ansprüche, wobei
- das Kopplungselement (32) durch ein Loch (62) im Rahmenelement (6) geführt ist und eine das Loch (62) begrenzende Seitenwand des Rahmenelements (6) einen Anschlag für das Kopplungselement (32) bildet, mit Hilfe dessen die Drehmomentstütze realisiert ist,
- in Blickrichtung parallel zur Rotationsachse (A) das Loch (62) mit der Schnittstelle (3) überlappt.

9. System nach einem der Ansprüche 1 bis 7, wobei
- das Kopplungselement (32) in einer Ausnehmung (64) des Rahmenelements (6) aufgenommen ist und eine die Ausnehmung (64) begrenzende Seitenwand des Rahmenelements (6) einen Anschlag für das Kopplungselement (32) bildet, mit Hilfe dessen die Drehmomentstütze realisiert ist,
- in Blickrichtung parallel zur Rotationsachse (A) die Ausnehmung (64) mit der Schnittstelle (3) überlappt.

10. System nach einem der vorhergehenden Ansprüche, wobei
- das Kopplungselement (32) an einem Ende eines Kabels (33) angeordnet ist,
- das Kabel (33) zumindest abschnittsweise im Inneren des Rahmenelements (6) verläuft.

11. System nach Anspruch 10, wobei
- das Kabel (33) ausgehend vom Kopplungselement (32) zunächst außerhalb des Rahmenelements (6) verläuft, dann durch eine Öffnung (63) im Rahmenelement (6) ins Innere des Rahmenelements (6) geführt ist und von da an zumindest abschnittsweise im Inneren des Rahmenelements (6) verläuft.

12. Fahrrad (100) aufweisend
- ein System nach einem der vorhergehenden Ansprüche,
- eine Steuereinheit (5) und/oder einen Akkumulator (8), die über die an der Schnittstelle (3) hergestellte Kopplung zwischen dem Kopplungselement (32) und der Fahrradnabe (10) elektrisch mit der Fahrradnabe (10) verbunden sind.

13. Verfahren zur Montage einer Fahrradnabe, umfassend die Schritte
- Bereitstellen einer Fahrradnabe (10), eines Rahmenelements (6) und eines Kopplungselements (32), wobei die Fahrradnabe (10) aufweist:
- ein Nabenelement (1),
- ein Nabengehäuse (2),
- eine Schnittstelle (3), und
- ein elektrisches Bauteil (4), das mit der Schnittstelle (3) elektrisch verbunden ist, wobei
- das Nabengehäuse (2) relativ zum Nabenelement (1) rotierbar um eine Rotationsachse (A) gelagert ist, um im Betrieb zusammen mit einem Rad eines Fahrrads zu rotieren,
- die Schnittstelle (3) an einer Außenseite der Fahrradnabe (10) angeordnet ist und starr mit dem Nabenelement (1) verbunden ist,
- die Schnittstelle (3) gegenüber der Rotationsachse (A) radial nach außen versetzt ist,
- die Schnittstelle (3) für eine elektrische und mechanische Kopplung der Fahrradnabe (10) mit einem Kopplungselement (32) eingerichtet ist, derart, dass über die Kopplung einerseits eine elektrische Verbindung vom Kopplungselement (32) zum elektrischen Bauteil (4) hergestellt ist und andererseits durch die Kopplung eine relative Rotation zwischen dem Nabenelement (1) und dem Kopplungselement (32) blockiert ist,
- mechanisches Koppeln der Fahrradnabe (10) mit dem Rahmenelement (6) derart, dass das Nabengehäuse (2) relativ zum Rahmenelement (6) und relativ zum Nabenelement (1) um die Rotationsachse (A) rotierbar ist,
- elektrisches und mechanisches Koppeln des Kopplungselements (32) mit der Fahrradnabe (10) über die Schnittstelle (3), und
- mechanisches Koppeln des Kopplungselements (32) mit dem Rahmenelement (6), wobei
- mit Hilfe der über die Schnittstelle (3) hergestellten elektrischen Kopplung zwischen dem Kopplungselement (32) und der Fahrradnabe (10) eine elektrische Verbindung vom Kopplungselement (32) zum elektrischen Bauteil (4) hergestellt wird,
- mit Hilfe der über die Schnittstelle (3) hergestellten mechanischen Kopplung zwischen dem Kopplungselement (32) und der Fahrradnabe (10) und mit Hilfe der mechanischen Kopplung zwischen dem Kopplungselement (32) und dem Rahmenelement (6) eine Drehmomentstütze für die Fahrradnabe (10) realisiert wird,
- das Kopplungselement (32) ein Steckverbinder ist und die mechanische und elektrische Kopplung zwischen dem Kopplungselement (32) und der Fahrradnabe (10) eine Steckverbindung ist,
- ein Steckergehäuse (320) sich zusammenhängend zwischen dem Rahmenelement (6) und der Fahrradnabe (10) erstreckt und sowohl in das Rahmenelement (6) als auch in die Fahrradnabe (10) zumindest hineinragt,
- das Steckergehäuse (320) elektrische Leiter (311, 321) der elektrischen Verbindung umgibt,
- das Steckergehäuse (320) stabil genug gebildet ist, um zumindest einen Teil des beim Betrieb der Fahrradnabe (10) auf das Nabenelement (1) wirkenden Drehmoments auf das Rahmenelement (6) abzuleiten.

## Claims

1. System comprising
- a bicycle hub (10) comprising
- a hub element (1),
- a hub housing (2),
- an interface (3), and
- an electrical component (4) that is electrically connected to the interface (3), wherein
- the hub housing (2) is mounted relative to the hub element (1) in order to be rotatable about a rotational axis (A) in order to rotate in operation together with a wheel of a bicycle,
- the interface (3) is arranged on an outer side of the bicycle hub (10) and is rigidly connected to the hub element (1),
- the interface (3) is offset radially outward relative to the axis of rotation (A),
- the interface (3) is designed for electrical and mechanical coupling of the bicycle hub (10) with a coupling element (32) in such a way that, on the one hand, an electrical connection is established via the coupling from the coupling element (32) to the electrical component (4) is established via the coupling, and on the other hand, relative rotation between the hub element (1) and the coupling element (32) is blocked by the coupling,
- a frame element (6),
- a coupling element (32), wherein
- the bicycle hub (10) is mechanically coupled to the frame element (6) in such a way that the hub housing (2) is rotatable relative to the frame element (6) and relative to the hub element (1) about the axis of rotation (A),
- the coupling element (32) is electrically and mechanically coupled to the bicycle hub (10) via the interface (3),
- the coupling element (32) is mechanically coupled to the frame element (6),
- an electrical connection is established from the coupling element (32) to the electrical component (4) by means of the electrical coupling established via the interface (3) between the coupling element (32) and the bicycle hub (10), the system is **characterized in that**
- a torque support for the bicycle hub (10) is realized by means of the mechanical coupling established via the interface (3) between the coupling element (32) and the bicycle hub (10) and by means of the mechanical coupling between the coupling element (32) and the frame element (6),
- the coupling element (32) is a plug connector and the mechanical and electrical coupling between the coupling element (32) and the bicycle hub (10) is a plug connection,
- a connector housing (320) extends continuously between the frame element (6) and the bicycle hub (10) and protrudes at least into both the frame element (6) and the bicycle hub (10),
- the plug housing (320) surrounds electrical conductors (311, 321) of the electrical connection,
- the plug housing (320) is formed to be sufficiently stable to transfer at least part of the torque acting on the hub element (1) during operation of the bicycle hub (10) to the frame element (6).

2. System according to claim 1, wherein
- the interface (3) is a socket in the bicycle hub (10).

3. System according to one of the preceding claims, wherein
- the electrical component (4) is an electric motor (4) which is designed to rotate the hub housing (2) relative to the hub element (1),
- the electric motor (4) is surrounded by the hub housing (2).

4. System according to one of the preceding claims, wherein
- the interface (3) is arranged on an outer surface of the bicycle hub (10) directed in the axial direction, wherein the axial direction is a direction parallel to the axis of rotation (A).

5. System according to one of the preceding claims, wherein
- the plug housing (320) is formed from a hard plastic and/or metal.

6. System according to one of the preceding claims, wherein
- the coupling element (32) is a plug,
- the plug housing (320) is the housing of the plug (32).

7. System according to claim 6, wherein
- the plug (32) is an angle plug.

8. System according to one of the preceding claims, wherein
- the coupling element (32) is guided through a hole (62) in the frame element (6) and a side wall of the frame element (6) bordering the hole (62) forms a stop for the coupling element (32), with the aid of which the torque support is realized,
- in the direction of view parallel to the axis of rotation (A), the hole (62) overlaps with the interface (3).

9. System according to one of claims 1 to 7, wherein
- the coupling element (32) is received in a recess (64) of the frame element (6) and a side wall of the frame element (6) bounding the recess (64) forms a stop for the coupling element (32), with the aid of which the torque support is realized,
- in the direction of view parallel to the axis of rotation (A), the recess (64) overlaps with the interface (3).

10. System according to one of the preceding claims, wherein
- the coupling element (32) is arranged at one end of a cable (33),
- the cable (33) runs at least in sections inside the frame element (6).

11. System according to claim 10, wherein
- the cable (33) initially runs outside the frame element (6) starting from the coupling element (32), then is guided through an opening (63) in the frame element (6) into the interior of the frame element (6) and from there runs at least in sections inside the frame element (6).

12. Bicycle (100) comprising
- a system according to one of the preceding claims,
- a control unit (5) and/or an accumulator (8) which are electrically connected to the bicycle hub (10) via the coupling established at the interface (3) between the coupling element (32) and the bicycle hub (10).

13. Method for mounting a bicycle hub, comprising the steps of
- providing a bicycle hub (10), a frame element (6) and a coupling element (32), wherein the bicycle hub (10) comprises:
- a hub element (1),
- a hub housing (2),
- an interface (3), and
- an electrical component (4) that is electrically connected to the interface (3), wherein
- the hub housing (2) is mounted relative to the hub element (1) so as to be rotatable about a rotational axis (A) in order to rotate in operation together with a wheel of a bicycle,
- the interface (3) is arranged on an outer side of the bicycle hub (10) and is rigidly connected to the hub element (1),
- the interface (3) is radially offset outwards relative to the axis of rotation (A),
- the interface (3) is designed for electrical and mechanical coupling of the bicycle hub (10) with a coupling element (32) in such a way that, on the one hand, an electrical connection is established from the coupling element (32) to the electrical component (4) via the coupling and, on the other hand, relative rotation between the hub element (1) and the coupling element (32) is blocked,
- mechanical coupling of the bicycle hub (10) with the frame element (6) in such a way that the hub housing (2) can rotate relative to the frame element (6) and relative to the hub element (1) about the axis of rotation (A),
- electrically and mechanically coupling the coupling element (32) to the bicycle hub (10) via the interface (3), and
- mechanically coupling the coupling element (32) to the frame element (6), wherein
- an electrical connection is established from the coupling element (32) to the electrical component (4) with the aid of the electrical coupling established via the interface (3) between the coupling element (32) and the bicycle hub (10),
- a torque support for the bicycle hub (10) is realized with the aid of the mechanical coupling established via the interface (3) between the coupling element (32) and the bicycle hub (10) and with the aid of the mechanical coupling between the coupling element (32) and the frame element (6),
- the coupling element (32) is a plug connector and the mechanical and electrical coupling between the coupling element (32) and the bicycle hub (10) is a plug connection,
- a connector housing (320) extends continuously between the frame element (6) and the bicycle hub (10) and protrudes at least into both the frame element (6) and the bicycle hub (10),
- the plug housing (320) surrounds electrical conductors (311, 321) of the electrical connection,
- the plug housing (320) is formed to be sufficiently stable to transfer at least part of the torque acting on the hub element (1) during operation of the bicycle hub (10) to the frame element (6).

## Revendications

1. Système comprenant
- un moyeu de bicyclette (10) comprenant
- un élément de moyeu (1),
- un boîtier de moyeu (2),
- une interface (3), et
- un composant électrique (4) qui est connecté électriquement à l'interface (3), dans lequel
- le boîtier de moyeu (2) est monté par rapport à l'élément de moyeu (1) de manière à pouvoir tourner autour d'un axe de rotation (A) afin de tourner en fonctionnement avec une roue d'un vélo,
- l'interface (3) est disposée sur un côté extérieur du moyeu de vélo (10) et est reliée de manière rigide à l'élément de moyeu (1),
- l'interface (3) est décalée radialement vers l'extérieur par rapport à l'axe de rotation (A),
- l'interface (3) est conçue pour le couplage électrique et mécanique du moyeu de bicyclette (10) avec un élément de couplage (32) de telle manière que, d'une part, une connexion électrique est établie via le couplage entre l'élément de couplage (32) et le composant électrique (4) et, d'autre part, la rotation relative entre l'élément de moyeu (1) et l'élément d'accouplement (32) est bloquée par l'accouplement,
- un élément de cadre (6),
- un élément d'accouplement (32), dans lequel
- le moyeu de bicyclette (10) est couplé mécaniquement à l'élément de cadre (6) de telle manière que le boîtier de moyeu (2) peut tourner par rapport à l'élément de cadre (6) et par rapport à l'élément de moyeu (1) autour de l'axe de rotation (A),
- l'élément d'accouplement (32) est couplé électriquement et mécaniquement au moyeu de bicyclette (10) via l'interface (3),
- l'élément d'accouplement (32) est couplé mécaniquement à l'élément de cadre (6),
- une connexion électrique est établie entre l'élément d'accouplement (32) et le composant électrique (4) au moyen du couplage électrique établi via l'interface (3) entre l'élément d'accouplement (32) et le moyeu de bicyclette (10), le système étant **caractérisé en ce que**
- un support de couple pour le moyeu de bicyclette (10) est réalisé au moyen du couplage mécanique établi via l'interface (3) entre l'élément de couplage (32) et le moyeu de bicyclette (10) et au moyen du couplage mécanique entre l'élément de couplage (32) et l'élément de cadre (6),
- l'élément d'accouplement (32) est un connecteur à fiche et l'accouplement mécanique et électrique entre l'élément d'accouplement (32) et le moyeu de bicyclette (10) est une connexion à fiche,
- un boîtier de connecteur (320) s'étend de manière continue entre l'élément de cadre (6) et le moyeu de bicyclette (10) et fait saillie au moins dans l'élément de cadre (6) et dans le moyeu de bicyclette (10),
- le boîtier de connecteur (320) entoure les conducteurs électriques (311, 321) de la connexion électrique,
- le boîtier de connecteur (320) est conçu pour être suffisamment stable afin de transférer au moins une partie du couple agissant sur l'élément de moyeu (1) pendant le fonctionnement du moyeu de bicyclette (10) vers l'élément de cadre (6).

2. Système selon la revendication 1, dans lequel
- l'interface (3) est une douille dans le moyeu de bicyclette (10).

3. Système selon l'une des revendications précédentes, dans lequel
- le composant électrique (4) est un moteur électrique (4) qui est conçu pour faire tourner le boîtier de moyeu (2) par rapport à l'élément de moyeu (1),
- le moteur électrique (4) est entouré par le boîtier de moyeu (2).

4. Système selon l'une des revendications précédentes, dans lequel
- l'interface (3) est disposée sur une surface extérieure du moyeu de bicyclette (10) orientée dans la direction axiale, la direction axiale étant une direction parallèle à l'axe de rotation (A).

5. Système selon l'une des revendications précédentes, dans lequel
- le boîtier de fiche (320) est formé à partir d'une matière plastique dure et/ou de métal.

6. Système selon l'une des revendications précédentes, dans lequel
- l'élément d'accouplement (32) est une fiche,
- le boîtier de fiche (320) est le boîtier de la fiche (32).

7. Système selon la revendication 6, dans lequel
- la fiche (32) est une fiche coudée.

8. Système selon l'une des revendications précédentes, dans lequel
- l'élément d'accouplement (32) est guidé à travers un trou (62) dans l'élément de cadre (6) et une paroi latérale de l'élément de cadre (6) bordant le trou (62) forme une butée pour l'élément d'accouplement (32), à l'aide de laquelle le support de couple est réalisé,
- dans la direction de vue parallèle à l'axe de rotation (A), le trou (62) chevauche l'interface (3).

9. Système selon l'une des revendications 1 à 7, dans lequel
- l'élément d'accouplement (32) est logé dans un évidement (64) de l'élément de châssis (6) et une paroi latérale de l'élément de châssis (6) bordant l'évidement (64) forme une butée pour l'élément d'accouplement (32), à l'aide de laquelle le support de couple est réalisé,
- dans la direction de vue parallèle à l'axe de rotation (A), le renfoncement (64) chevauche l'interface (3).

10. Système selon l'une des revendications précédentes, dans lequel
- l'élément d'accouplement (32) est disposé à une extrémité d'un câble (33),
- le câble (33) s'étend au moins par sections à l'intérieur de l'élément de cadre (6).

11. Système selon la revendication 10, dans lequel
- le câble (33) s'étend initialement à l'extérieur de l'élément de cadre (6) à partir de l'élément d'accouplement (32), puis est guidé à travers une ouverture (63) dans l'élément de cadre (6) à l'intérieur de l'élément de cadre (6) et s'étend à partir de là au moins par sections à l'intérieur de l'élément de cadre (6).

12. Vélo (100) comprenant
- un système selon l'une des revendications précédentes,
- une unité de commande (5) et/ou un accumulateur (8) qui sont reliés électriquement au moyeu de vélo (10) via le couplage établi à l'interface (3) entre l'élément de couplage (32) et le moyeu de vélo (10).

13. Procédé de montage d'un moyeu de bicyclette, comprenant les étapes suivantes
- fournir un moyeu de bicyclette (10), un élément de cadre (6) et un élément d'accouplement (32), dans lequel le moyeu de bicyclette (10) comprend :
- un élément de moyeu (1),
- un boîtier de moyeu (2),
- une interface (3), et
- un composant électrique (4) qui est connecté électriquement à l'interface (3), dans lequel
- le boîtier de moyeu (2) est monté par rapport à l'élément de moyeu (1) de manière à pouvoir tourner autour d'un axe de rotation (A) afin de tourner en fonctionnement avec une roue d'un vélo,
- l'interface (3) est disposée sur un côté extérieur du moyeu de bicyclette (10) et est reliée de manière rigide à l'élément de moyeu (1),
- l'interface (3) est décalée radialement vers l'extérieur par rapport à l'axe de rotation (A),
- l'interface (3) est conçue pour le couplage électrique et mécanique du moyeu de bicyclette (10) avec un élément de couplage (32) de telle manière que, d'une part, une connexion électrique est établie entre l'élément de couplage (32) et le composant électrique (4) via le couplage et, d'autre part, la rotation relative entre l'élément de moyeu (1) et l'élément de couplage (32) est bloquée,
- le couplage mécanique du moyeu de bicyclette (10) avec l'élément de cadre (6) de telle manière que le boîtier de moyeu (2) puisse tourner par rapport à l'élément de cadre (6) et par rapport à l'élément de moyeu (1) autour de l'axe de rotation (A),
- le couplage électrique et mécanique de l'élément de couplage (32) au moyeu de bicyclette (10) via l'interface (3), et
- couplage mécanique de l'élément de couplage (32) à l'élément de cadre (6), dans lequel
- une connexion électrique est établie entre l'élément de couplage (32) et le composant électrique (4) à l'aide du couplage électrique établi via l'interface (3) entre l'élément de couplage (32) et le moyeu de bicyclette (10),
- un support de couple pour le moyeu de bicyclette (10) est réalisé à l'aide du couplage mécanique établi via l'interface (3) entre l'élément de couplage (32) et le moyeu de bicyclette (10) et à l'aide du couplage mécanique entre l'élément de couplage (32) et l'élément de cadre (6),
- l'élément d'accouplement (32) est un connecteur à fiche et l'accouplement mécanique et électrique entre l'élément d'accouplement (32) et le moyeu de bicyclette (10) est une connexion à fiche,
- un boîtier de connecteur (320) s'étend de manière continue entre l'élément de cadre (6) et le moyeu de bicyclette (10) et fait saillie au moins dans l'élément de cadre (6) et dans le moyeu de bicyclette (10),
- le boîtier de connecteur (320) entoure les conducteurs électriques (311, 321) de la connexion électrique,
- le boîtier de connecteur (320) est conçu pour être suffisamment stable afin de transférer au moins une partie du couple agissant sur l'élément de moyeu (1) pendant le fonctionnement du moyeu de bicyclette (10) vers l'élément de cadre (6).
